(19) Europäisches Patentamt

European Patent Office

Office européen des brevets

(11) **EP 1 275 946 A1**

(12) **EUROPÄISCHE PATENTANMELDUNG**

(43) Veröffentlichungstag:
   **15.01.2003 Patentblatt 2003/03**

(51) Int Cl.7: **G01K 7/01**

(21) Anmeldenummer: **02100791.9**

(22) Anmeldetag: **09.07.2002**

(84) Benannte Vertragsstaaten:
   **AT BE BG CH CY CZ DE DK EE ES FI FR GB GR IE IT LI LU MC NL PT SE SK TR**
   Benannte Erstreckungsstaaten:
   **AL LT LV MK RO SI**

(30) Priorität: **11.07.2001 DE 10133736**

(71) Anmelder:
   • **Philips Corporate Intellectual Property GmbH**
    **20099 Hamburg (DE)**
   • **Koninklijke Philips Electronics N.V.**
    **5621 BA Eindhoven (NL)**

(72) Erfinder:
   • **Bisping, Michael,**
    **c/o Philips Corp.Int.Prop.GmbH**
    **52066, Aachen (DE)**
   • **Jabs, Hermann, c/o Philips Corp.Int.Prop.GmbH**
    **52066, Aachen (DE)**
   • **Marschner, Jürgen,**
    **c/o Philips Corp.Int.Prop.GmbH**
    **52066, Aachen (DE)**

(74) Vertreter: **Volmer, Georg, Dipl.-Ing. et al**
   **Philips Corporate Intellectual Property GmbH,**
   **Postfach 50 04 42**
   **52088 Aachen (DE)**

(54) **Anordnung zum Messen der Temperatur einer elektronischen Schaltung**

(57) Anordnung zum Messen der Temperatur einer elektronischen Schaltung, umfassend

- ein mit der elektronischen Schaltung in enger thermischer Verbindung stehendes Meßelement, das in jedem von wenigstens zwei Strompfaden je ein temperaturabhängiges Bauelement umfaßt, dessen Strom-Spannungs-Kennlinie gemäß einer in wenigstens zwei der Strompfade unterschiedlich vorgegebenen Funktion von der Temperatur abhängig ist, welche temperaturabhängigen Bauelemente mit je einem vorgegebenen Strom beaufschlagbar sind zum Hervorrufen je einer von der Temperatur abhängigen Spannung an jedem der temperaturabhängigen Bauelemente, sowie

- eine Auswerteschaltung zum Bilden einer ein Maß für die Temperatur der elektronischen Schaltung darstellenden Ausgangsspannung aus der Differenz der Spannungen an den temperaturabhängigen Bauelementen.

Durch Messung der Ausgangsspannung der erfindungsgemäßen Anordnung ermöglicht diese eine einfache, schnelle und genaue Messung der augenblicklichen Temperatur des Halbleiterkörpers. Der ermittelte Meßwert der Temperatur kann unmittelbar durch eine elektronische Signalverarbeitung, beispielsweise in einer Apparatur zur Durchführung des Vormessens, ausgewertet werden.

FIG.2

**Beschreibung**

Die Erfindung betrifft eine Anordnung zum Messen der Temperatur einer elektronischen Schaltung.

In der Fertigung von Halbleiterschaltungen, insbesondere monolithisch integrierter Halbleiterschaltungen, findet in der Regel nach Fertigstellung der Leiterstrukturen auf dem Halbleiterkörper und vor dem Einbau des Halbleiterkörpers in ein Gehäuse eine als Vormessung bezeichnete Prüfung statt, um defekte Schaltungen noch vor der Gehäusemontage aussondern zu können. Außerdem kann mit dieser Vormessung eine Klassifikation bzw. Spezifikation der Halbleiterschaltungen nach ihren Betriebsdaten vorgenommen werden. Voraussetzung für eine korrekte Vormessung ist die Kenntnis der augenblicklichen Temperatur des Halbleiterkörpers, da viele Meßgrößen temperaturabhängig sind.

Die Erfindung hat die Aufgabe, eine Anordnung zu schaffen, mit der eine Messung der augenblicklichen Temperatur des Halbleiterkörpers einfach, schnell und genau möglich ist.

Erfindungsgemäß wird diese Aufgabe durch eine Anordnung zum Messen der Temperatur einer elektronischen Schaltung gelöst, die

- ein mit der elektronischen Schaltung in enger thermischer Verbindung stehendes Meßelement, das in jedem von wenigstens zwei Strompfaden je ein temperaturabhängiges Bauelement umfaßt, dessen Strom-Spannungs-Kennlinie gemäß einer in wenigstens zwei der Strompfade unterschiedlich vorgegebenen Funktion von der Temperatur abhängig ist, welche temperaturabhängigen Bauelemente mit je einem vorgegebenen Strom beaufschlagbar sind zum Hervorrufen je einer von der Temperatur abhängigen Spannung an jedem der temperaturabhängigen Bauelemente, sowie
- eine Auswerteschaltung zum Bilden einer ein Maß für die Temperatur der elektronischen Schaltung darstellenden Ausgangsspannung aus der Differenz der Spannungen an den temperaturabhängigen Bauelementen

umfaßt.

Durch Messung der Ausgangsspannung der erfindungsgemäßen Anordnung ermöglicht diese eine einfache, schnelle und genaue Messung der augenblicklichen Temperatur des Halbleiterkörpers. Der ermittelte Meßwert der Temperatur kann unmittelbar durch eine elektronische Signalverarbeitung, beispielsweise in einer Apparatur zur Durchführung des Vormessens, ausgewertet werden.

Darüber hinaus kann die erfindungsgemäße Anordnung auch im bestimmungsgemäßen Betrieb der elektronischen Schaltung zur laufenden Temperaturüberwachung eingesetzt werden. Maßnahmen zum Schutz der elektronischen Schaltung beispielsweise vor Überhitzung lassen sich so sehr einfach durchführen.

Vorzugsweise sind die temperaturabhängigen Bauelemente mit Halbleiterdioden gebildet. Diese sind einfach aufgebaut und in einer elektronischen Schaltung ohne zusätzliche Fertigungsschritte vorzusehen. Ihre Temperaturabhängigkeit ist gut reproduzierbar.

Insbesondere sind die in den unterschiedlichen Strompfaden angeordneten Halbleiterdioden mit unterschiedlichen Flächen ihrer Halbleiterübergänge ausgebildet. Dies ermöglicht auf einfache Weise die Herstellung gemäß unterschiedlich vorgegebener Funktionen temperaturabhängiger Bauelemente ohne Änderung von Fertigungsparametern beispielsweise in der Diffusion der Leiterstrukturen des Halbleiterkörpers der elektronischen Schaltung.

Gemäß einer weiteren Ausgestaltung der erfindungsgemäßen Anordnung sind die temperaturabhängigen Bauelemente mit je einem ersten ihrer Anschlüsse miteinander verbunden und sind ihre jeweils zweiten Anschlüsse mit einer Einrichtung zum Aufprägen wenigstens nahezu identischer Ströme verbunden. Entsprechend den unterschiedlichen Temperaturabhängigkeiten der Strom-Spannungs-Kennlinien der temperaturabhängigen Bauelemente werden dabei an den temperaturabhängigen Bauelementen unterschiedliche von der Temperatur abhängige Spannungen hervorgerufen, deren Differenz einfach und genau gemessen und ausgewertet werden kann.

Vorteilhaft umfaßt die Einrichtung zum Aufprägen wenigstens nahezu identischer Ströme eine Stromspiegelanordnung, mit Hilfe derer einfach und genau übereinstimmende Ströme erzeugt und eingespeist werden können.

Die temperaturabhängigen Bauelemente sind weiterhin bevorzugt mit ihren miteinander verbundenen ersten Anschlüssen mit einer Einrichtung zum Abgeben einer Bezugsspannung gekoppelt. Die Messung der von der Temperatur abhängigen Spannungen an den einzelnen temperaturabhängigen Bauelementen erfolgt dabei gegenüber dieser Bezugsspannung. Insbesondere entspricht die Bezugsspannung nicht einem von der elektronischen Schaltung bereitgestellten Massepotential auf beispielsweise einem in der elektronischen Schaltung vorhandenen Masseleitersystem; vielmehr wird die Bezugsspannung bevorzugt gesondert temperaturstabil erzeugt. Dies kann nach einer vorteilhaften Weiterbildung der Erfindung dadurch geschehen, daß die Einrichtung zum Abgeben einer Bezugsspannung mit einer Bandabstandsreferenz ausgebildet ist, von der die Bezugsspannung abgeleitet wird. Durch die Nutzung der gesondert temperaturstabil erzeugten Bezugsspannung anstelle des Massepotentials werden Ungenauigkeiten in der Temperaturmessung, wie sie durch lokale Schwebungen auf dem in der elektronischen Schaltung vorhandenen Masseleitersystem auftreten können, eliminiert.

In einer weiteren Ausgestaltung der Erfindung umfaßt die Auswerteschaltung

- wenigstens eine Invertierungsstufe zum Invertieren wenigstens einer der von der Temperatur abhängigen Spannungen an wenigstens einem der temperaturabhängigen Bauelemente,
- wenigstens eine Spannungsverknüpfungsstufe zum Bilden eines Spannungswertes, der dem arithmetischen Mittel aus wenigstens einer der von der Temperatur abhängigen Spannungen an wenigstens einem der temperaturabhängigen Bauelemente und wenigstens einer der invertierten, von der Temperatur abhängigen Spannungen an wenigstens einem weiteren der temperaturabhängigen Bauelemente entspricht, sowie
- eine Ausgangsverstärkerstufe zum Verstärken und Abgeben des von der Spannungsverknüpfungsstufe gebildeten Spannungswertes als ein Maß für die Temperatur der elektronischen Schaltung darstellende Ausgangsspannung.

Durch diese Ausgestaltung der Auswertestufe ist es möglich, die ein Maß für die Temperatur der elektronischen Schaltung darstellende Ausgangsspannung unabhängig von indirekten Größen wie der Bezugsspannung und allein durch die Dimensionierung der erfindungsgemäßen Anordnung zu bestimmen.

In einer Fortbildung der vorstehend beschriebenen, erfindungsgemäßen Anordnung, in der die temperaturabhängigen Bauelemente mit ihren miteinander verbunden ersten Anschlüssen mit einer Einrichtung zum Abgeben einer Bezugsspannung gekoppelt sind, wird vorteilhaft der Auswerteschaltung zur Festlegung ihres Arbeitspunkts dieselbe Bezugsspannung wie den miteinander verbunden ersten Anschlüssen der temperaturabhängigen Bauelemente zugeführt. Dies erhöht zusätzlich die Genauigkeit der Temperaturmessung Außerdem führt die Verwendung der intern erzeugten Bezugsspannung dazu, daß die von der erfindungsgemäßen Anordnung umfaßten Bauteile in optimalen Arbeitspunkten betrieben werden Dies hat zur Folge, daß die erfindungsgemäße Anordnung über einen weiten Temperaturbereich sehr linear arbeitet.

In einer weiteren Ausbildung der vorbeschriebenen Anordnung nach der Erfindung

- ist die elektronische Schaltung, deren Temperatur zu messen ist, in der Form einer monolithisch integrierten Halbleiterschaltung aufgebaut,
- sind das Meßelement und die Auswerteschaltung mit der als monolithisch integrierte Halbleiterschaltung aufgebauten elektronischen Schaltung auf einem Halbleiterkörper zusammengsfaßt und
- umfaßt die als monolithisch integrierte Halbleiterschaltung aufgebaute elektronische Schaltung Kontakte zum Zu- und /oder Abführen elektrischer Spannungen und / oder Ströme zu bzw. von der elektronischen Schaltung zum Zu- bzw. Abführen von Versorgungsenergie und /oder Signalen, wobei

  - wenigstens ein erster dieser Kontakte zum Bereitstellen der ein Maß für die Temperatur der elektronischen Schaltung darstellenden Ausgangsspannung der Auswerteschaltung und
  - wenigstens ein zweiter dieser Kontakte zum Bereitstellen der den temperaturabhängigen Bauelementen an ihren miteinander verbunden ersten Anschlüssen sowie der Auswerteschaltung zur Festlegung ihres Arbeitspunkts zugeführten Bezugsspannung

  eingerichtet ist.

In dieser Ausgestaltung ist die erfindungsgemäße Anordnung einfach und unmittelbar zur Bestimmung der Temperatur der elektronischen Schaltung und zur Auswertung des Meßwertes der Temperatur auch außerhalb der elektronischen Schaltung, zB. während einer Prüfung derselben im Zusammenhang mit einem Fertigungsvorgang, verwendbar.

Ein Ausführungsbeispiel der Erfindung ist in der Zeichnung dargestellt und wird im Nachfolgenden näher erläutert. Es zeigen

Fig. 1    blockschematisch eine Messung der Temperatur einer mit einer erfindungsgemäßen Anordnung ausgebildeten, monolithisch integrierten elektronischen Schaltung,

Fig. 2    ein Beispiel für eine Ausgestaltung einer erfindungsgemäßen Anordnung

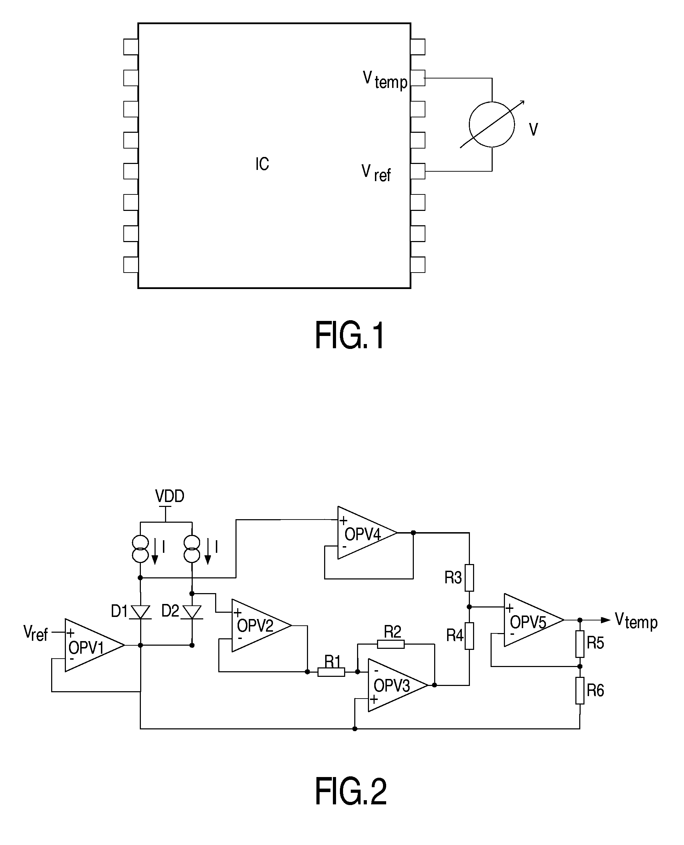

In Fig. 1 ist mit IC eine monolithisch integrierte elektronische Schaltung bezeichnet, die schematisch als rechteckförmiges Gebilde mit daran an den in der Figur 1 durch in senkrechter Ausrichtung wiedergegebene Begrenzungslinien symbolisierten Kanten angeordneten Reihen von Kontakten dargestellt ist. Diese Kontakte dienen der elektronischen Schaltung zum Zu- und /oder Abführen elektrischer Spannungen und /oder Ströme zu bzw. von der elektronischen Schaltung zum Zu- bzw. Abführen von Versorgungsenergie und /oder Signalen. Durch eine beispielsweise gemäß Fig 2 ausgebildete und im Zusammenhang mit dieser Figur näher beschriebene Anordnung wird an einem ersten dieser Kontakte, der in Fig 1 beispielhaft als der zweite von oben in der an der rechten Seite der elektronischen Schaltung IC dargestellten Reihe der Kontakte ausgewählt ist, eine ein Maß für die Temperatur der elektronischen Schaltung IC darstellende Ausgangsspannung $V_{temp}$ abgegeben. Durch dieselbe Anordnung wird außerdem an einem zweiten dieser Kontakte, der in Fig 1 beispielhaft als der fünfte von oben in der an der rechten Seite der elektronischen Schaltung IC dargestellten Reihe der Kontakte ausgewählt ist, eine in der Anordnung erzeugte, temperaturkonstante Bezugsspannung $V_{ref}$ abgegeben. Durch einfache Spannungsmessung wird die Differenz zwischen der ein Maß für die Temperatur der elektronischen Schaltung IC darstellenden Ausgangsspannung $V_{temp}$ und der Bezugsspannung $V_{ref}$ bestimmt

Die Temperatur der elektronischen Schaltung IC ergibt sich aus der folgenden Gleichung:

$$[1] \qquad T = \frac{V_{temp} - V_{ref}}{a} \, ,$$

wobei

$T$     die absolute Temperatur der elektronischen Schaltung IC und

$a$     eine Konstante ist

Zur Bestimmung der Konstanten a werden im Zusammenhang mit Fig 2 im Nachfolgenden nähere Betrachtungen angestellt.

Die Messung der Spannungsdifferenz aus der Ausgangsspannung $V_{temp}$ und der Bezugsspannung $V_{ref}$ mit Hilfe eines Voltmeters ermöglicht so nach Lösen der linearen Gleichung [1] auf einfache und schnelle Weise eine schnelle und einfache Feststellung der augenblicklichen Temperatur T der elektronischen Schaltung IC.

Fig 2 zeigt ein Beispiel für eine Anordnung, mit der die vorgenannte Ausgangsspannung $V_{temp}$ und die Bezugsspannung $V_{ref}$ erzeugt werden. Vor einer Beschreibung der Bestandteile der Anordnung nach Fig 2 wird kurz das Prinzip der hier angewandten Meßmethode erläutert.

Um die Temperatur T messen zu können, sind Bauelemente notwendig, deren elektrische Eigenschaften sich mit dieser Temperatur T ändern. Ein elektronisches Bauelement, das diese Eigenschaft aufweist, ist die Diode. Das Betriebsverhalten einer Diode im Durchlaßbereich für Ströme, die groß gegenüber ihrem Sättigungssperrstrom sind, läßt sich durch die folgenden Gleichungen beschreiben:

$$I = I_s \cdot e^{\frac{V_D}{V_T}}$$
$$[2] \qquad V_T = \frac{k \cdot T}{q}$$

Dabei ist mit

$I$     die Stromstärke des Stromes durch die Diode,
$I_S$     der Sättigungssperrstrom der Diode,
$V_D$     die Diodenspannung in Flußrichtung der Diode gemessen,
$V_T$     die Temperaturspannung,
$k=1{,}38*10^{-23}$ J/K     die Boltzmannkonstante und
$q=1{,}6*10^{-19}$ C     die Elementarladung

bezeichnet.

Wird die obige Diodengleichung [2] nach der Diodenspannung $V_D$ umgsformt, so ergibt sich folgende Gleichung:

$$[3] \qquad V_D = V_T \cdot \ln\left(\frac{I}{I_s}\right)$$

Da der Sättigungssperrstrom $I_S$ einer Halbleiterdiode proportional zur Fläche ihres (P-N-) Übergangs ist, erhält man aus der Gleichung [3] für zwei Dioden D1 und D2 mit unterschiedlichen Flächen die Beziehungen

$$[4] \quad \begin{aligned} V_{D1} &= V_T \cdot \ln\left(\frac{I}{I_{S1}}\right) \\ V_{D2} &= V_T \cdot \ln\left(\frac{I}{I_{S2}}\right) \end{aligned}$$

Dabei ist mit

$I_{S1}$      der Sättigungssperrstrom der Diode D1,
$I_{S2}$      der Sättigungssperrstrom der Diode D2,
$V_{D1}$      die Diodenspannung der Diode D1, in Flußrichtung gemessen,
$V_{D2}$      die Diodenspannung der Diode D2, in Flußrichtung gemessen,

bezeichnet.

In der praktischen Ausführung einer monolithisch integrierten Schaltung werden unterschiedliche Flächen von Dioden häufig durch Parallelschaltung einer entsprechenden Vielzahl identischer Dioden entsprechend dem gewünschten Flächenfaktor, d.h. dem Verhältnis der Flächen der Dioden zueinander, erzielt.

Im betrachteten Fall sind die Sättigungssperrströme der Dioden D1 und D2 über die Gleichungen

$$[5] \quad I_{S1} = I_S$$

$$I_{S2} = x \cdot I_S$$

zu bestimmen, wobei mit

$x$      der Flächenfaktor, d.h. das Verhältnis der Flächen der Dioden D1 und D2 zueinander,

bezeichnet ist.

Weist eine (zweite) Diode im Vergleich zu einer (ersten) Diode mit vorgegebener Fläche einen Flächenfaktor $x$ auf, was zum Beispiel dadurch erreicht ist, daß die (zweite) Diode aus einem Diodenfeld von $x$ zueinander parallelgeschalteten (ersten) Dioden mit der genannten, vorgegebenen Fläche besteht, so wird sich beim Beaufschlagen dieser (zweiten) Diode, die den Flächenfaktor $x$ aufweist, mit einem unveränderten Strom $I$ die Diodenspannung $V_T$ gegenüber derjenigen der (ersten) Diode mit vorgegebener Fläche entsprechend ändern. Werden in der obengenannten Dimensionierung der Dioden D1 und D2 diesen identische Ströme zugeführt, so ergibt sich folgender Unterschied $DV$ in den Diodenspannungen:

$$[6] \quad \begin{aligned} \Delta V &= V_{D1} - V_{D2} \\ &= V_T \cdot \left(\ln\frac{I}{I_{S1}} - \ln\frac{I}{I_{S2}}\right) = V_T \cdot \left(\ln\frac{I}{I_S} - \ln\frac{I}{x \cdot I_S}\right) \\ &= V_T \cdot \ln x = T \cdot \underbrace{\frac{k}{q}}_{konst.} \ln x \end{aligned}$$

Werden, wie in Fig. 2 an den dort abgebildeten Dioden D1 und D2 gezeigt, zwei derartig dimensionierte Dioden mit ihren Kathoden miteinander verbunden, kann der Unterschied *DV* in den Diodenspannungen als Spannungsdifferenz unmittelbar an den Anoden der Dioden abgegriffen werden.

Die Spannungsdifferenz *DV* zwischen den vorstehend beschriebenen Dioden D1 und D2 (beispielsweise den Dioden D1 und D2 in Fig 2) ist abhängig vom Rächenfaktor *x* und der Temperaturspannung $V_T$, die, wie aus Gleichung [2] ersichtlich, direkt proportional zur absoluten Temperatur *T* ist. Somit ist auch die Spannungsdifferenz *DV* direkt proportional zur absoluten Temperatur *T*.

Die in Fig 2 dargsstellte Anordnung nutzt diese Temperaturabhängigkeit aus und ermöglicht es, über eine externe Spannungsmessung einfach und genau die absolute Temperatur der elektronischen Schaltung IC zu bestimmen.

In der in Fig 2 dargestellten Anordnung sind mit den Bezugszeichen D1 und D2 eine erste bzw. eine zweite, gemäß vorstehenden Ausführungen dimensionierte Halbleiterdiode bezeichnet, die mit ihren Kathoden miteinander sowie mit einem Ausgang und einem invertierenden Eingang (-) eines ersten Operationsverstärkers OPV1 verbunden sind. Die Dioden D1 und D2 bilden je ein temperaturabhängiges Bauelement eines Meßelements und sind dazu durch eine Verbindung ihrer Anoden mit je einer Stromquelle in je einen von zwei Strompfaden eingefügt. Bevorzugt sind die Stromquellen durch zwei gemeinsam gesteuerte Ausgangszweige einer Stromspiegelanordnung gebildet. Die Dioden D1 und D2 werden als temperaturabhängige Bauelemente mit je einem im jeweiligen Strompfad durch die zugehörige Stromquelle vorgegebenen Strom I beaufschlagt. Dadurch wird an den Anoden der Dioden D1 und D2 je eine von der Temperatur abhängige Spannung hervorgerufen. Um mit diesem Meßelement die Temperatur der - in Fig. 2 nicht dargestellten - elektronischen Schaltung IC erfassen zu können, steht es mit dieser elektronischen Schaltung IC in enger thermischer Verbindung. Vorzugsweise ist die Anordnung nach Fig. 2 mit der elektronischen Schaltung IC auf einem gemeinsamen Halbleiterkörper monolithisch integriert. Darüber hinaus sind jedoch auch anders aufgebaute thermische Verbindungen möglich, beispielsweise eine Klebung oder Lötung, durch die mehrere Halbleiterkörper zu einer kompakten Baugruppe zusammengefaßt sein können.

Die in der Anordnung nach Fig. 2 aus den Dioden D1 und D2 und den zu ihnen jeweils in Reihe geschalteten Stromquellen gebildeten Strompfade sind parallel zueinander zwischen einem Versorgungsspannungsanschluß VDD und dem Verbindungspunkt der Kathoden der Dioden D1, D2 angeordnet. Die Anode der zweiten Diode D2 ist ferner mit einem nichtinvertierenden Eingang (+) eines zweiten Operationsverstärkers OPV2 verbunden. Ein Ausgang und ein invertierender Eingang (-) des zweiten Operationsverstärkers OPV2 sind mit einem ersten Anschluß eines ersten ohmschen Widerstands R1 verbunden. Auf diese Weise bildet der zweite Operationsverstärker OPV2 einen Spannungsfolger, durch den das Potential VD2 von der Anode der zweiten Diode D2 niederohmig dem ersten Anschluß des ersten ohmschen Widerstands R1 zugeführt wird.

In entsprechender Weise ist die Anode der ersten Diode D1 mit einem nichtinvertierenden Eingang (+) eines vierten Operationsverstärkers OPV4 verbunden. Ein Ausgang und ein invertierender Eingang (-) des vierten Operationsverstärkers OPV4 sind miteinander verbunden. Auf diese Weise bildet der vierte Operationsverstärker OPV4 ebenfalls einen Spannungsfolger, durch den hier das Potential VD1 von der Anode der ersten Diode D1 niederohmig abgegeben wird.

Auch der erste Operationsverstärker OPV1 ist als Spannungsfolger geschaltet. Seinem nichtinvertierenden Eingang (+) wird die Bezugsspannung $V_{ref}$ zugeführt, die bevorzugt von einer Bandabstandsreferenz abgeleitet wird und daher sehr temperaturstabil ist. Diese Bezugsspannung $V_{ref}$ steht somit an der Verbindung der Kathoden der Dioden D1, D2 niederohmig zur Verfügung. Sie wird im übrigen auch dem in Fig. 1 entsprechend bezeichneten Kontakt der elektronischen Schaltung IC zugeführt.

Zur weiteren Verarbeitung stehen in der beschriebenen Anordnung nach Fig. 2 somit die Potentiale von den Anoden der Dioden D1, D2 und die Bezugsspannung $V_{ref}$ niederohmig zur Verfügung.

Ein zweiter Anschluß des ersten ohmschen Widerstands R1 ist mit einem ersten Anschluß eines zweiten ohmschen Widerstands R2 und einem invertierenden Eingang eines dritten Operationsverstärkers OPV3 verbunden. Ein zweiter Anschluß des zweiten ohmschen Widerstands R2 ist mit einem Ausgang des dritten Operationsverstärkers OPV3 verbunden. Ein nichtinvertierender Eingang (+)des dritten Operationsverstärkers OPV3 ist mit dem Ausgang des ersten Operationsverstärkers OPV1 verbunden. Der dritte Operationsverstärker OPV3 arbeitet als invertierender Spannungsverstärker, dessen Spannungsverstärkung durch das Verhältnis der Widerstandswerte des ersten und des zweiten ohmschen Widerstands R1, R2 bestimmt wird. Als Bezugspotential für diesen Spannungsverstärker wird die Bezugsspannung $V_{ref}$ herangezogen.

Der Ausgang des vierten Operationsverstärkers OPV4 ist mit einem ersten Anschluß eines dritten ohmschen Widerstands R3 verbunden. Der Ausgang des dritten Operationsverstärkers OPV3 ist mit einem ersten Anschluß eines vierten ohmschen Widerstands R4 verbunden. Der dritte und der vierte ohmsche Widerstand R3, R4 sind mit ihren zweiten Anschlüssen miteinander und mit einem nichtinvertierenden Eingang (+) eines fünften Operationsverstärkers OPV5 verbunden.

Über den dritten und den vierten ohmschen Widerstand R3 und R4 werden die Spannungen von den Ausgängen des dritten und des vierten Operationsverstärkers OPV3 und OPV4 im Verbindungspunkt der zweiten Anschlüsse des dritten und des vierten ohmschen Widerstands R3, R4 zusammengeführt. Der dritte und der vierte ohmsche Widerstand R3, R4 bilden somit eine Spannungsverknüpfungsstufe zum Bilden eines Spannungswertes, der dem mit den Widerstandswerten des dritten und des vierten ohmschen Widerstands R3, R4 gewichteten arithmetischen Mittel aus der von der Temperatur abhängigen Spannung $V_{D1}$ am ersten der temperaturabhängigen Bauelemente, der ersten Diode D1, und der mit der Spannungsverstärkung des dritten Operationsverstärkers OPV3 invertierten, von der Temperatur abhängigen Spannung $V_{D2}$ am zweiten der temperaturabhängigen Bauelemente, der zweiten Diode D2, entspricht.

Der fünfte Operationsverstärker OPV5 arbeitet als nichtinvertierender Verstärker mit der Bezugsspannung $V_{ref}$. Dazu ist ein Ausgang des fünften Operationsverstärkers OPV5 mit einem ersten Anschluß eines fünften ohmschen Widerstands R5 verbunden. Der fünfte ohmsche Widerstand R5 bildet mit einem sechsten ohmschen Widerstand R6 eine Reihenschaltung, deren einer Endpunkt aus dem ersten Anschluß des fünften ohmschen Widerstands R5 und deren zweiter Endpunkt aus einem ersten Anschluß des sechsten ohmschen Widerstands R6 gebildet ist. Dieser zweite Endpunkt ist mit dem Ausgang des ersten Operationsverstärkers OPV1 verbunden und erhält somit die Bezugsspannung $V_{ref}$ zugeleitet. Über eine Verbindung ihrer zweiten Anschlüsse bilden der fünfte ohmsche Widerstand R5 und der sechste ohmsche Widerstand R6 die Reihenschaltung; diese Verbindung ist außerdem mit einem invertierenden Eingang (-) des fünften Operationsverstärkers OPV5 verknüpft. Die Verstärkung des fünften Operationsverstärkers OPV5 ergibt sich somit aus den Widerstandswerten des fünften und des sechsten ohmschen Widerstands R5 und R6. Am Ausgang des fünften Operationsverstärkers OPV5 wird die ein Maß für die Temperatur T der elektronischen Schaltung IC darstellende Ausgangsspannung $V_{temp}$ bereitgestellt.

Anknüpfend an die obigen Gleichungen [1] bis [6], die auch für die das Meßelement bildenden Dioden D1 und D2 gelten, kann nun für die in Fig. 2 dargestellte Anordnung der in Gleichung [1] aufgeführte Faktor a errechnet werden. Dazu kann ferner mit guter Näherung davon ausgegangen werden, daß die Spannungen an den Ausgängen der Spannungsfolger OPV2 und OPV4 mit den Spannungen an ihren jeweiligen (nichtinvertierenden (+)) Eingängen übereinstimmen. Damit ergibt sich unter Berücksichtigung der Beschaltung des dritten Operationsverstärkers OPV3 für diesen die Gleichung

$$[7] \qquad V_{D2'} = -\frac{R_2}{R_1}[V_{D2} - V_{ref}] + V_{ref},$$

wobei mit

$R_1$     der Widerstandswert des ersten ohmschen Widerstands R1,
$R_2$     der Widerstandswert des zweiten ohmschen Widerstands R2 und mit
$V_{D2'}$     das Potential am Ausgang des dritten Operationsverstärkers OPV3

bezeichnet ist.

Über den dritten und den vierten ohmschen Widerstand R3 und R4 werden die Spannungen $V_{D1}$ und $V_{D2}$, im Verbindungspunkt dieser Widerstände und damit am nichtinvertierenden Eingang (+) des fünften Operationsverstärkers OPV5 zusammengeführt. Dem Verhältnis der Widerstandswerte dieser Widerstände R3 und R4 entsprechend stellt sich am nichtinvertierenden Eingang (+) des fünften Operationsverstärkers OPV5 folgende Spannung $V_X$ ein:

$$[8] \qquad V_X = \frac{R_4}{R_3 + R_4}(V_{D1} - V_{D2'}) + V_{D2'},$$

wobei mit

$R_3$     der Widerstandswert des dritten ohmschen Widerstands R3 und mit
$R_4$     der Widerstandswert des vierten ohmschen Widerstands R4

bezeichnet ist.

Der fünfte Operationsverstärker OPV5 arbeitet als nichtinvertierender Verstärker mit der Bezugsspannung $V_{ref}$. Die Verstärkung ergibt sich aus den Widerständen R5 und R6. Der fünfte Operationsverstärker OPV5 stellt an seinem Ausgang die ein Maß für die Temperatur T der elektronischen Schaltung IC darstellende Ausgangsspannung $V_{temp}$ bereit, die sich aus der folgenden Gleichung berechnet:

$$[9] \qquad V_{temp} = (V_x - V_{ref}) \frac{R_5 + R_6}{R_6} + V_{ref},$$

wobei mit

$R_5$    der Widerstandswert des fünften ohmschen Widerstands R5 und mit
$R_6$    der Widestandswert des sechsten ohmschen Widerstands R6

bezeichnet ist.

Werden Gleichungen [7] und [8] in Gleichung [9] eingesetzt, so ergibt sich für die ein Maß für die Temperatur T der elektronischen Schaltung IC darstellende Ausgangsspannung V$_{temp}$ folgende Beziehung

$$[10] V_{temp} = \left[ \frac{R_4}{R_3 + R_4} \cdot V_{D1} + \left(1 - \frac{R_4}{R_3 + R_4}\right) \cdot \left(-\frac{R_2}{R_1}(V_{D2} - V_{ref}) + V_{ref}\right) - V_{ref}\right] \cdot \frac{R_5 + R_6}{R_6} + V_{ref}$$

Für eine zweckmäßige Dimensionierung des beschriebenen Ausführungsbeispiels der erfindungsgemäßen Anordnung werden die Widerstandswerte des ersten und des zweiten ohmschen Widerstands R1, R2 gleich groß gewählt. Da der dritte Operationsverstärker OPV3 als invertierender Spannungsverstärker beschaltet ist, stellt sich somit eine Spannungsverstärkung von

$$A_V = -1$$

ein.

Die Widerstände R3 und R4 bestimmen die Spannung V$_x$ am Verbindungspunkt der zweiten Anschlüsse des dritten und des vierten ohmschen Widerstands R3, R4 mit dem nichtinvertierenden Eingang (+) des fünften Operationsverstärkers OPV5. Dem fünften Operationsverstärker OPV5 soll an seinem nichtinvertierenden Eingang (+) genau der arithmetische Mittelwert der Spannungen V$_{D1}$ und V$_{D2}$ zugeführt werden. Die Widerstandswerte des dritten und des vierten ohmschen Widerstands R3 und R4 müssen aus diesem Grund ebenfalls gleich groß gewählt werden. Mit

$$R_1 = R_2 \text{ und } R_3 = R_4$$

vereinfacht sich Gleichung [10] folgendermaßen:

$$[11] \qquad V_{temp} = \frac{1}{2} \cdot \frac{R_5 + R_6}{R_6}[V_{D1} - V_{D2}] + V_{ref}$$

Wird schließlich die Differenz der Spannungen an den Anoden der Dioden D1 und D2 durch Gleichung [6] ersetzt, so erhält man für die ein Maß für die Temperatur T der elektronischen Schaltung IC darstellende Ausgangsspannung V$_{temp}$:

$$[12] \qquad V_{temp} = \underbrace{\frac{k \cdot \ln x}{2q} \frac{R_5 + R_6}{R_6}}_{a} \cdot T + V_{ref} \qquad .$$

Der in der vorstehenden Gleichung [12] mit *a* zusammengefaßte Faktor ist über der Temperatur T konstant und allein von der Dimensionierung der Schaltung abhängig. Wie auch aus Gleichung [1] ersichtlich ist, bestimmt der Faktor a die Steilheit der Temperaturkurve. Die Widerstände R5, R6 werden so dimensioniert, daß eine ausreichende Verstärkung erzielt wird. Die ein Maß für die Temperatur T der elektronischen Schaltung IC darstellende Ausgangsspannung $V_{temp}$ steigt somit linear mit der absoluten Temperatur T an. Die Ausgangsspannung $V_{temp}$ besteht aus der Addition des temperaturabhängigen Teils und der Bezugsspannung $V_{ref}$, die innerhalb der erfindungsgemäßen Anordnung bzw. der elektronischen Schaltung IC beispielsweise aus der Bandabstandsspannung einer Bandabstandsreferenz abgeleitet wird. Steht diese Bezugsspannung $V_{ref}$ an einem äußeren Kontakt der elektronischen Schaltung IC wie in Fig 1 angedeutet zur Verfügung, kann durch Messung der Potentialdifferenz zwischen (dem Potential) der Ausgangsspannung $V_{temp}$ und (dem Potential) der Bezugsspannung $V_{ref}$ direkt der temperaturabhängige Teil (des Potentials) der Ausgangsspannung $V_{temp}$ gemessen werden. Ist die Steilheit von $V_{temp}$ bekannt, kann somit einfach und genau die absolute Temperatur T de elektronischen Schaltung IC bestimmt werden.

Die Erfindung ermöglicht somit eine einfache und präzise Messung der Temperatur einer elektronischen Schaltung sowohl während ihrer Herstellung als auch während ihres späteren, bestimmungsgemäßen Betriebs. Die erfindungsgemäße Anordnung ist in ihrer Genauigkeit nur von der Streuung eines geringen Teils der verwendeten Bauelemente abhängig und daher unempfindlich gegen Fertigungsstreuungen und Störungen, die beispielsweise die Bezugsspannung betreffen, oder gegen Störeffekte auf den Versorgungsspannungs- oder Masseleitungen der elektronischen Schaltung. Durch eine gezielte Nutzung der internen Bezugsspannung $V_{ref}$ anstelle eines in der elektronischen Schaltung oder der erfindungsgemäßen Anordnung auftretenden Massepotentials werden Ungenauigkeiten durch lokale Schwebungen eliminiert.

Vorzugsweise ist die erfindungsgemäße Anordnung vollständig mit der elektronischen Schaltung, deren Temperatur zu messen ist, integriert.

Eine besondere Bedeutung hat dabei in der Anordnung des gezeigten Ausführungsbeispiels die durch den dritten Operationsverstärker OPV3 gebildete Invertierungsstufe. Durch Invertieren der Spannung $V_{D2}$ an der Anode der zweiten Diode D2 in Bezug auf die Referenzspannung $V_{ref}$ tritt an der Reihenschaltung des dritten und des vierten ohmschen Widerstands R3 und R4 die Summe der beiden Potentiale $V_{D1}$ und $V_{D2}$ an den Anoden der ersten und der zweiten Diode D1, D2 auf. Zusätzlich wird dadurch erreicht, daß die Bezugsspannung $V_{ref}$ am Ausgang des fünften Operationsverstärkers OPV5 nur als additive Größe mitgeführt wird, wie aus der Gleichung [12] zu ersehen ist. Durch Messung der Spannungsdifferenz wie in Fig 1 angedeutet kann diese Bezugsspannung $V_{ref}$ subtrahiert werden.

Die Verwendung einer internen Bezugsspannung führt außerdem dazu, daß die in der erfindungsganäßen Anordnung verwendeten Bauelemente in optimalen Arbeitspunkten betrieben werden. Dies hat zur Folge, daß die erfindungsgemäße Anordnung über einen weiten Temperaturbereich - in einem Dimensionierungsbeispiel ist ein Bereich von -40°C bis +125°C leicht erreichbar - sehr linear arbeitet. Dies ist für die Spezifikation der zu vermessenden elektronischen Schaltungen bedeutsam.

**Patentansprüche**

1.   Anordnung zum Messen der Temperatur einer elektronischen Schaltung, umfassend

-   ein mit der elektronischen Schaltung in enger thermischer Verbindung stehendes Meßelement, das in jedem von wenigstens zwei Strompfaden je ein temperaturabhängiges Bauelement umfaßt, dessen Strom-Spannungs-Kennlinie gemäß einer in wenigstens zwei der Strompfade unterschiedlich vorgegebenen Funktion von der Temperatur abhängig ist, welche temperaturabhängigen Bauelemente mit je einem vorgegebenen Strom beaufschlagbar sind zum Hervorrufen je einer von der Temperatur abhängigen Spannung an jedem der temperaturabhängigen Bauelemente, sowie

-   eine Auswerteschaltung zum Bilden einer ein Maß für die Temperatur der elektronischen Schaltung darstellenden Ausgangsspannung aus der Differenz der Spannungen an den temperaturabhängigen Bauelementen.

2.   Anordnung nach Anspruch 1,
**dadurch gekennzeichnet, daß** die temperaturabhängigen Bauelemente mit Halbleiterdioden gebildet sind

3.   Anordnung nach Anspruch
**dadurch gekennzeichnet, daß** die in den unterschiedlichen Strompfaden angeordneten Halbleiterdioden mit unterschiedlichen Flächen ihrer Halbleiterübergänge ausgebildet sind

4.   Anordnung nach Anspruch 1, 2 oder 3,
**dadurch gekennzeichnet, daß** die temperaturabhängigen Bauelemente mit je einem ersten ihrer Anschlüsse miteinander verbunden sind und ihre jeweils zweiten Anschlüsse mit einer Einrichtung zum Aufprägen wenigstens nahezu identischer Ströme verbunden sind.

**5.** Anordnung nach Anspruch 4,
**dadurch gekennzeichnet, daß** die Einrichtung zum Aufprägen wenigstens nahezu identischer Ströme eine Stromspiegelanordnung umfaßt.

**6.** Anordnung nach Anspruch 4 oder 5,
**dadurch gekennzeichnet, daß** die temperaturabhängigen Bauelemente mit ihren miteinander verbundenen ersten Anschlüssen mit einer Einrichtung zum Abgeben einer Bezugsspannung gekoppelt sind

**7.** Anordnung nach Anspruch 6,
**dadurch gekennzeichnet, daß** die Einrichtung zum Abgeben einer Bezugsspannung mit einer Bandabstandsreferenz ausgebildet ist, von der die Bezugsspannung abgeleitet wird

**8.** Anordnung nach Anspruch 1,
**dadurch gekennzeichnet, daß** die Auswerteschaltung umfaßt:

- wenigstens eine Invertierungsstufe zum Invertieren wenigstens einer der von der Temperatur abhängigen Spannungen an wenigstens einem der temperaturabhängigen Bauelemente,
- wenigstens eine Spannungsverknüpfungsstufe zum Bilden eines Spannungswertes, der dem arithmetischen Mittel aus wenigstens einer der von der Temperatur abhängigen Spannungen an wenigstens einem der temperaturabhängigen Bauelemente und wenigstens einer der invertierten, von der Temperatur abhängigen Spannungen an wenigstens einem weiteren der temperaturabhängigen Bauelemente entspricht, sowie
- eine Ausgangsverstärkerstufe zum Verstärken und Abgeben des von der Spannungsverknüpfungsstufe gebildeten Spannungswertes als Ausgangsspannung.

**9.** Anordnung nach Anspruch 8, in der die temperaturabhängigen Bauelemente mit ihren miteinander verbunden ersten Anschlüssen mit einer Einrichtung zum Abgeben einer Bezugsspannung gekoppelt sind,
**dadurch gekennzeichnet, daß** der Auswerteschaltung zur Festlegung ihres Arbeitspunkts dieselbe Bezugsspannung wie den miteinander verbunden ersten Anschlüssen der temperaturabhängigen Bauelemente zugeführt wird.

**10.** Anordnung nach Anspruch 9,
**dadurch gekennzeichnet, daß**

- die elektronische Schaltung deren Temperatur zu messen ist, in der Form einer monolithisch integrierten Halbleiterschaltung aufgebaut ist,
- das Meßelement und die Auswerteschaltung mit der als monolithisch integrierte Halbleiterschaltung aufgebauten elektronischen Schaltung auf einem Halbleiterkörper zusammengefaßt sind und daß
- die als monolithisch integrierte Halbleiterschaltung aufgebaute elektronische Schaltung Kontakte umfaßt zum Zu- und /oder Abführen elektrischer Spannungen und /oder Ströme zu bzw. von der elektronischen Schaltung zum Zu- bzw. Abführen von Versorgungsenergie und /oder Signalen, wobei

  - wenigstens ein erster dieser Kontakte zum Bereitstellen der ein Maß für die Temperatur der elektronischen Schaltung darstellenden Ausgangsspannung der Auswerteschaltung und
  - wenigstens ein zweiter dieser Kontakte zum Bereitstellen der den temperaturabhängigen Bauelementen an ihren miteinander verbunden ersten Anschlüssen sowie der Auswerteschaltung zur Festlegung ihres Arbeitspunkts zugeführten Bezugsspannung

  eingerichtet ist.

**11.** Anordnung nach Anspruch 10, eingerichtet zum Bereitstellen der ein Maß für die Temperatur der elektronischen Schaltung darstellenden Ausgangsspannung der Auswerteschaltung während einer Prüfung der elektronischen Schaltung bei deren Fertigung

**12.** Halbleiterprodukt mit einer Anordnung nach einem der Ansprüche 1 bis 11.

FIG.1

FIG.2

**Europäisches Patentamt**

## EUROPÄISCHER RECHERCHENBERICHT

Nummer der Anmeldung

EP 02 10 0791

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | HOLDAWAY M: "FACTORS AFFECTING ACCURACY IN SILICON DIGITAL TEMPERATURE SENSORS" ELECTRONIC ENGINEERING, MORGAN-GRAMPIAN LTD. LONDON, GB, Bd. 72, Nr. 876, Januar 2000 (2000-01), Seiten 26-27,29-30, XP000945903 ISSN: 0013-4902 * das ganze Dokument * | 1-7 | G01K7/01 |
| A | US 5 961 215 A (CROWLEY MATTHEW P ET AL) 5. Oktober 1999 (1999-10-05) * Zusammenfassung; Abbildungen 1,9 * | 1-8,12 | |

| RECHERCHIERTE SACHGEBIETE (Int.Cl.7) |
|---|
| G01K |

Der vorliegende Recherchenbericht wurde für alle Patentansprüche erstellt

| Recherchenort | Abschlußdatum der Recherche | Prüfer |
|---|---|---|
| DEN HAAG | 2. Oktober 2002 | Ramboer, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 02 10 0791

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-10-2002

| Im Recherchenbericht angeführtes Patentdokument | Datum der Veröffentlichung | Mitglied(er) der Patentfamilie | Datum der Veröffentlichung |
|---|---|---|---|
| US 5961215 A | 05-10-1999 | KEINE | |

Für nähere Einzelheiten zu diesem Anhang : siehe Amtsblatt des Europäischen Patentamts, Nr. 12/82

EPO FORM P0461